(19) Europäisches Patentamt
European Patent Office
Office européen des brevets

(11) **EP 3 132 127 B1**

(12) **FASCICULE DE BREVET EUROPEEN**

(45) Date de publication et mention de la délivrance du brevet:
**21.03.2018 Bulletin 2018/12**

(21) Numéro de dépôt: **15720376.1**

(22) Date de dépôt: **09.04.2015**

(51) Int Cl.:
***F02B 29/04*** *(2006.01)*

(86) Numéro de dépôt international:
**PCT/FR2015/050928**

(87) Numéro de publication internationale:
**WO 2015/158985 (22.10.2015 Gazette 2015/42)**

(54) **REFROIDISSEUR D'AIR DE SURALIMENTATION, CIRCUIT D'ADMISSION D'AIR ET MOTEUR ASSOCIE SURALIMENTE PAR UN TURBOCOMPRESSEUR**

ANSAUGLUFTKÜHLER FÜR AUFGELADENEN MOTOR, ANSAUGSYSTEM UND AUFGELADENEN MOTOR

INTAKE AIR COOLER FOR SUPERCHARGED ENGINE, INTAKE AIR ADMISSION SYSTEM AND SUPERCHARGED ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2014 FR 1453428**

(43) Date de publication de la demande:
**22.02.2017 Bulletin 2017/08**

(73) Titulaire: **Renault S.A.S.**
**92100 Boulogne-Billancourt (FR)**

(72) Inventeurs:
• **OLLIVIER, Laurent**
**75012 Paris (FR)**
• **PLANTE, François**
**91750 Champcueil (FR)**

(56) Documents cités:
**WO-A1-2004/040106** **WO-A1-2011/102784**
**DE-A1-102013 206 089** **JP-A- 2009 127 888**

## Description

### DOMAINE TECHNIQUE DE L'INVENTION

La présente invention concerne un refroidisseur d'air, un circuit d'admission d'air d'un moteur et un moteur associé.

L'invention propose plus particulièrement un refroidisseur d'air de suralimentation et un circuit d'admission d'air d'un moteur suralimenté par un turbocompresseur.

### ETAT DE LA TECHNIQUE ANTERIEURE

Il est fréquent que les moteurs, qu'ils soient diesel ou à essence, soient suralimentés par un turbocompresseur de façon à améliorer leurs performances. Le turbocompresseur permet notamment d'augmenter leur rendement et leur puissance. Aussi connu en association avec l'utilisation d'un turbocompresseur est l'utilisation d'un refroidisseur d'air d'admission, comme indiqué dans WO 2011/102784.

Pour chaque moteur, il est nécessaire de dimensionner correctement le turbocompresseur et, il faut optimiser la taille du turbocompresseur.

Un "gros" turbocompresseur présente un rendement optimal pour un débit et une pression des gaz d'échappement élevés. De tels débit et pression sont fournis par le moteur lorsqu'il fonctionne à hauts régimes. À bas régimes, un gros turbocompresseur présente un rendement médiocre, du fait notamment de son inertie importante.

De plus lorsque le régime du moteur est inférieur à un régime prédéterminé, le turbocompresseur ne fonctionne pas car le débit et la pression des gaz d'échappement sont trop faibles. Le régime prédéterminé est appelé régime d'accrochage du turbocompresseur.

Un "petit" turbocompresseur présente un régime d'accrochage plus faible que celui d'un gros turbocompresseur. Il présente aussi un rendement optimal pour des valeurs de débit et de pression des gaz d'échappement plus faibles que celles nécessaires pour un gros turbocompresseur. Cependant, il est limité pour un fonctionnement à des régimes plus élevés, car la totalité des gaz d'échappement fournis par le moteur ne peuvent participer à l'augmentation de la pression de l'air frais par le compresseur.

Le compromis est difficile à trouver puisqu'il est nécessaire que le rendement du moteur soit optimal dans une plage importante de régimes allant de bas régimes de l'ordre de 1000 tours par minute à des hauts régimes jusqu'à des valeurs d'environ 5500, voire 6000 tours par minute.

En général, le dimensionnement est réalisé pour que le rendement du turbocompresseur soit acceptable à des faibles régimes du moteur. Par conséquent de tels compresseurs ne permettent pas l'augmentation optimale de la compression de l'air frais à des régimes élevés.

La détermination du débit et de la pression des gaz d'échappement dépendent des caractéristiques du moteur, c'est-à-dire notamment de sa cylindrée, ainsi que du remplissage naturel des chambres de combustion de ses cylindres.

Le remplissage naturel correspond à la quantité d'air effectivement admise dans les chambres de combustion des cylindres du moteur.

Pour chaque moteur, à chaque régime de fonctionnement, correspond une quantité d'air théorique qui est admise dans les chambres de combustion des cylindres du moteur.

Le rapport entre le remplissage naturel et la quantité d'air théorique définit le rendement volumétrique du moteur.

Ainsi, une augmentation du remplissage naturel, donc du rendement volumétrique naturel, à bas régimes du moteur, permet d'augmenter le débit ainsi que la pression des gaz d'échappement, et par conséquent permet au turbocompresseur de fonctionner à des régimes du moteur plus bas. Cela permet aussi l'augmentation du rendement du turbocompresseur à bas régimes et/ou l'utilisation d'un turbocompresseur plus gros qui améliore le rendement du moteur à des régimes plus élevés. Dans tous les cas l'augmentation du rendement volumétrique naturel à bas régime est avantageuse.

Il est connu pour certains moteurs tels que les moteurs à aspiration naturelle appelé également moteur atmosphérique, c'est-à-dire sans turbocompresseur, d'utiliser les effets de la résonance acoustique du circuit d'admission qui est liée à la propagation d'ondes de dépression dues aux cylindres, notamment lors de l'ouverture et de la fermeture des soupapes d'admission.

Lorsque la fréquence de résonance du circuit d'admission correspond à la moitié d'une fréquence de rotation déterminée du vilebrequin du moteur, le rendement volumétrique naturel est augmenté ce qui améliore les performances du moteur au régime correspondant à la fréquence de rotation déterminée.

En effet, l'air est alors soumis à un régime vibratoire qui est en phase avec les instants d'ouverture et de fermeture des soupapes d'admission des chambres de combustion, ce qui favorise leur remplissage.

Cependant, chaque circuit d'admission présente une seule fréquence de résonance. Ainsi il n'est possible de favoriser qu'un seul régime du moteur.

Par conséquent, il est courant d'adapter le turbocompresseur pour qu'il présente un rendement satisfaisant aux bas régimes, en défavorisant ainsi le fonctionnement du turbocompresseur aux hauts régimes.

Une solution consiste en ce que chaque chambre de combustion soit reliée à un répartiteur d'air, agencé en aval du circuit d'admission, par deux conduits d'alimentation de géométries différentes. Des moyens de dérivation permettent d'orienter le flux d'air dans l'un ou l'autre des conduits d'alimentation en fonction du régime du moteur.

Cependant, un tel circuit est difficile à réaliser. En effet, le doublement du nombre de conduits d'alimentation rend plus complexe les usinages et/ou assemblages à réaliser entre le répartiteur et les chambres de combustion, et peut conduire à un encombrement du compartiment moteur.

Il provoque une augmentation des pertes de charges qui réduisent fortement les gains de rendement ainsi obtenus.

Une telle solution n'est donc pas transposable à un moteur suralimenté par un turbocompresseur.

En effet, une petite diminution de la pression d'alimentation de la turbine provoque une importante diminution des performances du turbocompresseur.

De plus, un tel circuit ne permet de favoriser que deux régimes de rotation du moteur.

Une autre solution, transposable à un moteur suralimenté par un turbocompresseur, est décrite dans le document N° FR 2818319 et permet de palier tout ou partie des inconvénients précités. Cette autre solution consiste notamment à insérer une portion intermédiaire dans le circuit d'admission et faire varier le volume de cette portion intermédiaire de façon à faire varier la fréquence de résonance du circuit d'admission en fonction de la fréquence d'excitation du moteur pour favoriser le remplissage naturel des chambres de combustion du moteur.

Cependant, cette solution présente un certain nombre d'inconvénients.

Même si un tel dispositif permet de faire varier la fréquence de résonance du circuit d'admission de façon que l'air qui y circule soit soumis à une fréquence favorable au remplissage naturel des chambres de combustion du moteur, celui-ci présente un encombrement important. En effet, un tel circuit d'admission présente un encombrement variable en fonction de la variation du volume de la portion intermédiaire elle-même.

En sus, dans le cas de tels moteurs suralimentés, la mise en oeuvre d'acoustique variable est plus complexe car elle requiert une variation de longueur très conséquente, par exemple plus de 600mm dans le cas de la solution décrite dans ce brevet. Ceci génère des contraintes d'implantation sévères du circuit d'admission dans le compartiment moteur. Cette problématique est d'autant plus importante dans le cadre de moteurs suralimentés pour lesquels des fréquences très basses sont souhaitées et donc des longueurs très importantes.

Par ailleurs, la variation du volume de ladite portion intermédiaire peut être effectuée, d'après le brevet en question :

- soit au moyen d'un actionneur mécanique commandant la translation d'une portion intermédiaire télescopique et rigide, dans ce cas le volume d'encombrement est maximum ;

- soit par l'utilisation de soufflets souples présentant un volume d'encombrement plus réduit mais, de part l'utilisation d'un matériau souple, la variation du volume est relativement peu précise.

## EXPOSE DE L'INVENTION

Le dispositif décrit par la suite vise à remédier à tout ou partie des inconvénients de l'état de la technique et notamment à réaliser de manière simple et fiable un dispositif permettant d'adapter un circuit d'admission d'air de suralimentation à une fréquence de résonnance du circuit, lequel présente un encombrement réduit.

A cet effet, l'invention a pour objet un refroidisseur d'air de suralimentation pour un circuit d'admission d'air d'un moteur suralimenté par un turbocompresseur, caractérisé en ce que le refroidisseur comprend :

- un échangeur;

- une boite d'entrée pour conduire l'air de suralimentation d'une entrée du refroidisseur vers l'échangeur ; et

- une boite de sortie pour conduire l'air de suralimentation de l'échangeur vers une sortie du refroidisseur ;

la boite d'entrée, l'échangeur et la boite de sortie délimitant un volume utile agencé pour y recevoir l'air de suralimentation, le refroidisseur étant caractérisé en ce qu'il comprend des moyens de commande agencés pour faire varier le volume utile.

Une telle caractéristique, permettant de faire varier le volume utile du refroidisseur d'air de suralimentation, permet de faire varier la fréquence de résonance du circuit d'admission en fonction de la fréquence d'excitation du moteur pour favoriser le remplissage naturel des chambres de combustion du moteur.

En effet, dans le cadre d'un circuit d'admission d'air d'un moteur suralimenté par un turbocompresseur, généralement un tel circuit d'admission d'une part, est alimenté en air par un compresseur du turbocompresseur, et, d'autre part, alimente en air le répartiteur et les chambres de combustion, le circuit d'admission se composant généralement d'une conduite amont du côté du compresseur et d'une conduite aval du côté du répartiteur entre lesquelles est placé le refroidisseur d'air suralimenté.

De manière acoustique, un tel système peut être simplifié à la juxtaposition, d'une part, de deux tubes :

- un premier tube symbolisant la conduite amont ; et

- un deuxième tube symbolisant la conduite aval avec le répartiteur,

et, d'autre part à un « gros » volume, à savoir le refroidisseur d'air suralimenté.

L'équation régissant le fonctionnement acoustique de ce genre de système est assez complexe et ne permet pas d'expliquer de manière didactique l'influence de la géométrie du circuit d'admission sur la fréquence d'accord, et plus précisément l'influence du volume utile du refroidisseur d'air suralimenté.

A des fins explicatives, une version simplifiée peut être considérée dans laquelle la contribution de la conduite en amont du refroidisseur d'air suralimenté est supprimée, celle-ci ne jouant qu'à environ 10% sur le calage acoustique. Un tel système simplifié de la ligne d'air peut alors être modélisé par la juxtaposition seulement d'un tube, à savoir le tube symbolisant la conduite aval, avec refroidisseur d'air suralimenté.

La fréquence de ce système est donnée par la formule suivante :

$$f = \frac{c}{2\pi}\sqrt{\frac{S}{L \cdot V}}$$

avec :

- c : la vitesse du son ;

- L : la Longueur de la conduite aval du refroidisseur d'air suralimenté ;

- S : la Section de la conduite aval du refroidisseur d'air suralimenté ; et

- V : le Volume du refroidisseur d'air suralimenté.

Usuellement, comme c'est le cas de la solution décrite dans le brevet N° FR 2818319, la géométrie du refroidisseur d'air suralimenté n'est définie que pour des considérations aérauliques, telles que les pertes de charge, et thermiques, telles que le refroidissement. Dans un tel cas, le calage acoustique est alors réalisé en optimisant la géométrie des conduites amont et aval du refroidisseur d'air suralimenté, notamment dans les solutions présentées dans le brevet précité, en faisant varier leur longueur, influant alors sur la valeur de « L » de l'équation.

Au contraire dans notre cas, la variation du volume utile du refroidisseur d'air suralimenté permet de faire varier la valeur « V » de cette équation, faisant varier la fréquence du système.

Ainsi, une fois la géométrie figée par les moyens de commande à un volume utile déterminé du refroidisseur d'air suralimenté, la ligne d'air possède un ensemble de fréquences propres fixes dont une seule est exploitable pour le fonctionnement du moteur car correspondant à une excitation possible par le fonctionnement moteur. L'accord acoustique est exploitable quand il existe une cohérence entre la fréquence propre du système et la fréquence d'excitation du moteur, soit quand :

$$f = \frac{c}{2\pi}\sqrt{\frac{S}{L \cdot V}} \quad \text{et} \quad f = \frac{O \cdot N}{60}$$

avec :

- O : l'harmonique d'excitation du moteur correspondant au nombre d'évènements d'ouverture des soupapes sur un tour moteur. Pour un moteur à 4 temps, le cycle complet se déroule sur 2 tours moteurs, dans ce cas, la moitié des cylindres sont ouverts en un tour moteur, d'où le fait que O est égal à la moitié du nombre de cylindres pour un moteur à 4 temps. Pour un moteur 2 temps, le cycle moteur complet se déroule sur un tour moteur, dans ce cas, O est égal au nombre de cylindres ; et

- N : le régime moteur.

En d'autres termes, et pour une géométrie donnée, le système ne peut résonner que sur une plage de régimes restreinte autour du régime d'accord défini par la formule :

$$N = \frac{60}{O}\frac{c}{2\pi}\sqrt{\frac{S}{L \cdot V}}$$

Une telle résonance se traduit par une amélioration du remplissage moteur dans la plage de régimes considérée.

Par ailleurs, et au contraire de ce qui est décrit dans le document N° FR 2818319, ce n'est pas un volume d'une portion intermédiaire du circuit d'admission qui est variable par la variation de sa longueur, mais seulement le volume utile du refroidisseur d'air suralimenté qui varie grâce aux moyens de commande.

Une telle solution permet notamment de s'affranchir d'un encombrement extérieur variable du circuit d'admission dans le véhicule. En effet, grâce à un tel refroidisseur, son encombrement défini par son volume extérieur est fixe puisque la longueur du circuit d'admission est constante. Seul le volume utile du refroidisseur défini comme le volume agencé pour y recevoir l'air de suralimentation, donc à l'intérieur dudit refroidisseur, varie par l'action des moyens de commande. L'implantation du refroidisseur d'air de suralimentation est donc aisée dans un circuit d'admission, et plus généralement dans le moteur.

Par ailleurs, un tel refroidisseur permet un réglage plus affiné et un meilleur ajustement de la fréquence. En effet, le système ne pouvant résonner que sur une plage de régimes restreinte autour du régime d'accord, l'utilisation d'une conduite intermédiaire localement souple, de par l'utilisation notamment de soufflets, ne garantit pas une précision optimale sur le calage acoustique.

Dans notre cas, le conduit d'admission est rigide ce qui permet de faire varier la fréquence du circuit d'admission de manière plus précise.

Par ailleurs, dans une telle configuration, seul le refroidisseur d'air de suralimentation du circuit d'admission d'air permet la variation de sa fréquence ce qui permet au refroidisseur de pouvoir être installé tant sur des véhicules neufs lors d'une étape de fabrication que sur des véhicules usagers, par exemple par le remplacement du refroidisseur lors d'une étape de réparation ou de maintenance et ce, sans devoir modifier le conduit d'admission.

Une telle solution est ainsi plus fiable et permet de fonctionner également avec des pressions de suralimentation élevées sans être confronté à des problématiques de fuites.

Selon une caractéristique avantageuse, les moyens de commande sont logés au moins en partie dans la boite d'entrée et/ou dans la boite de sortie. Cela permet également de réduire son encombrement.

Avantageusement encore, les moyens de commande sont au nombre de deux, et de préférence placés de sorte à être sensiblement symétriques par rapport à l'échangeur. De préférence encore, l'un de ces deux moyens de commande est placé à l'entrée de l'échangeur, l'autre de ces deux moyens de commande étant placé à la sortie de l'échangeur.

Dans une configuration particulière, l'échangeur est un réseau de faisceaux.

Selon une caractéristique technique particulière, les moyens de commande sont autorégulés.

Une telle caractéristique permet de s'affranchir de tout capteur ou de dispositif extérieur pour piloter les moyens de commande.

Selon un mode de réalisation avantageux, les moyens de commande autorégulés comprennent au moins une palette mobile en rotation par rapport au refroidisseur et liée mécaniquement à au moins une cuillère placée en regard de l'entrée ou de la sortie du refroidisseur, de sorte que l'angle de rotation de la palette dépend de la pression exercée par l'air sur la cuillère associée.

Plus précisément, lorsque cette palette mobile est placée dans la boite d'entrée ou dans la boite de sortie, sa rotation permet la variation du volume utile du refroidisseur, à l'intérieur de ladite boite d'entrée ou respectivement de sortie. La cuillère placée en regard de l'entrée ou de la sortie du refroidisseur est ainsi placée dans le flux d'air le traversant de sorte que l'action de ce flux d'air sur cette cuillère entraine en rotation ladite palette mobile.

De préférence, la relation entre la pression exercée par l'air sur la cuillère et l'amplitude du déplacement de ladite cuillère est effectuée au moyen d'un système de ressorts.

Ainsi, un tel système de ressorts de tarage adéquat à choisir particulier en fonction de la vitesse d'écoulement, de la masse du système et de la taille de la cuillère, permet une autorégulation du système.

Selon une autre variante, les moyens de commande comprennent au moins une paroi mobile formant piston coulissant dans la boite d'entrée et/ou de sortie.

Dans ce cas, cette paroi mobile formant piston permet également de faire varier le volume utile dans la boite d'entrée et/ou de sortie, et donc de faire varier la fréquence de résonnance du refroidisseur en fonction du régime moteur.

Selon un autre mode de réalisation particulier, les moyens de commande comprennent au moins deux parois de fermeture mobiles entre :

- une position ouverte, dans laquelle l'ensemble des faisceaux du réseau de faisceaux sont ouverts à l'entrée et à la sortie dudit réseau de faisceaux ; et

- une position fermée dans laquelle un nombre maximum prédéterminé de faisceaux du réseau de faisceaux sont fermés à l'entrée et à la sortie dudit réseau de faisceaux.

Dans une telle configuration, c'est le volume utile du refroidisseur qui varie en fonction du nombre de faisceaux fermés, lesquels sont alors isolés du système vibratoire. Ceci permet ainsi la variation du volume utile de l'échangeur donc également celui du refroidisseur.

De préférence, et dans une telle configuration, la paroi de fermeture mobile présente en outre une position intermédiaire dans laquelle un nombre inférieur au nombre maximum prédéterminé de faisceaux du réseau de faisceaux sont fermés à l'entrée et/ou à la sortie dudit réseau de faisceaux.

Selon un autre aspect, l'invention a également pour objet un circuit d'admission d'air d'un moteur suralimenté par un turbocompresseur, reliant un compresseur du turbocompresseur et un répartiteur d'air qui permet de répartir l'air de suralimentation entre les orifices d'admission des chambres de combustion, le circuit d'admission étant caractérisé en ce qu'il comporte un refroidisseur d'air de suralimentation tel que décrit ci-avant.

Par ailleurs, l'invention concerne aussi un moteur suralimenté par un turbocompresseur comprenant un circuit d'admission, le moteur étant caractérisé en ce que le circuit d'admission d'air comprend un refroidisseur d'air de suralimentation tel que décrit ci-avant.

**BREVE DESCRIPTION DES FIGURES**

D'autres caractéristiques et avantages de l'invention ressortiront à la lecture de la description qui suit, donnée uniquement à titre d'exemple, en référence aux figures annexées, qui illustrent :

- figure 1, un schéma d'un groupe motopropulseur suralimenté selon l'état de la technique ;

- figure 2, une vue en coupe d'un refroidisseur selon l'état de la technique ;

- figures 3A et 3B, des vues en coupe d'un refroidisseur selon un premier mode de réalisation de l'invention dans une position ouverte et dans une position fermée ;

- figures 4A et 4B, des vues en coupe d'un refroidisseur selon un deuxième mode de réalisation de l'invention dans une position ouverte et dans une position fermée ;

- figures 5A et 5B, des vues en coupe d'un refroidisseur selon un troisième mode de réalisation de l'invention dans une position ouverte et dans une position fermée ;

- figures 6A et 6B, des vues en coupe d'un refroidisseur selon un quatrième de réalisation de l'invention dans une position ouverte et dans une position fermée ;

- figure 7, un schéma d'un groupe motopropulseur selon un mode de réalisation de l'invention.

Pour plus de clarté, les éléments identiques ou similaires sont repérés par des signes de référence identiques sur l'ensemble des figures.

## DESCRIPTION DETAILLEE D'AU MOINS UN MODE DE REALISATION

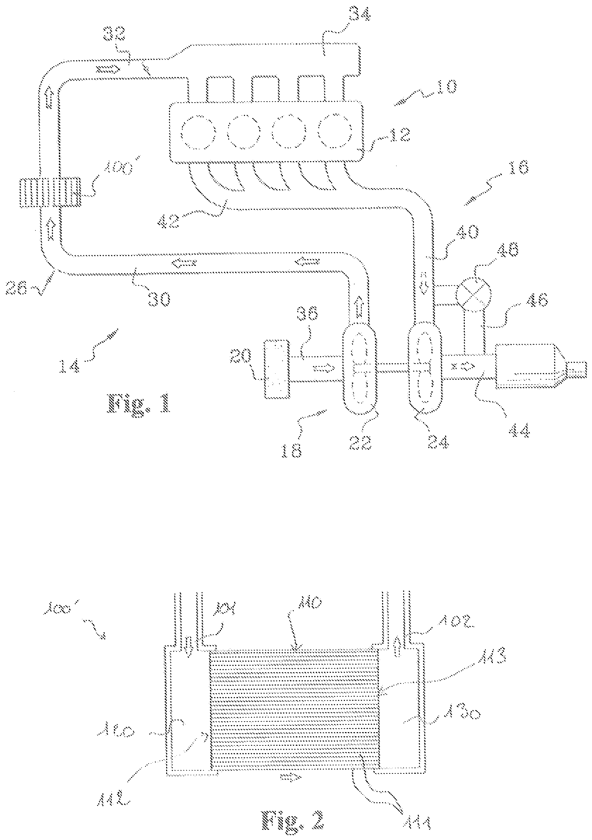

La figure 1 représente un schéma groupe motopropulseur suralimenté 10 selon l'état de la technique. Il est composé principalement d'un moteur à combustion 12, d'un circuit d'admission 14, d'un circuit d'échappement 16 et d'un turbocompresseur 18.

Un filtre à air 20 est situé en amont du circuit d'admission 14 qui permet de retenir les particules présentes dans l'air frais provenant de l'atmosphère.

Le turbocompresseur 18 comprend un compresseur 22 qui met sous pression de l'air frais atmosphérique et une turbine 24 qui fournit l'énergie mécanique nécessaire à l'entraînement du compresseur 22.

Le circuit d'admission 14 comporte un conduit d'admission 26 dans lequel est agencé un dispositif de refroidissement ou refroidisseur 100' qui permet de refroidir l'air d'admission provenant du compresseur 22.

Le conduit d'admission 26 est alors divisé en un premier élément amont 30 et un second élément aval 32 situés de part et d'autre du refroidisseur 100' respectivement. Le second élément aval 32 débouche dans un répartiteur d'air 34 qui alimente les chambres de combustion du moteur 12.

Lors du fonctionnement du groupe motopropulseur 10, l'air frais provenant de l'atmosphère est admis dans un tronçon d'entré 36 du circuit d'admission 14 après avoir traversé le filtre à air 20. Il est alors aspiré, puis comprimé par le compresseur 22. La compression de l'air provoque son échauffement. L'air est ensuite refroidi lors de son passage dans le refroidisseur 100'. À la sortie de ce dernier, le second élément aval 32 conduit l'air frais comprimé dans le répartiteur d'air 34.

Après la combustion, les gaz d'échappement sous pression sont rejetés dans une conduite d'échappement 40 par l'intermédiaire d'un collecteur d'échappement 42 qui alimente la turbine 24.

Les gaz d'échappement sont alors rejetés dans l'atmosphère par un tronçon de sortie 44 du circuit d'échappement 16. Un conduit de dérivation 46 permet de dériver une partie des gaz d'échappement directement de la conduite d'échappement vers le tronçon de sortie 44. Une vanne 48 est insérée dans le conduit de dérivation 46 pour contrôler le flux de gaz qui circule dans le conduit de dérivation 46. Ainsi, lorsque le débit des gaz d'échappement est supérieur au débit maximal admissible par la turbine 24, le conduit de dérivation 46 permet d'évacuer la différence entre les deux débits directement vers le tronçon de sortie 44.

Un groupe motopropulseur 10 équipé d'un tel circuit d'admission 14 ne permet pas un rendement optimal du moteur 12. Ceci est notamment dû au remplissage des chambres de combustion du moteur.

Tel que décrit précédemment, un tel circuit d'admission 14 ne permet pas un fonctionnement optimal du turbocompresseur 18 dans une plage de fonctionnement du moteur suffisamment large.

Par conséquent, les performances du moteur 12 ne sont pas optimales.

La figure 2 illustre une vue en coupe d'un refroidisseur 100' selon l'état de la technique.

Le refroidisseur 100' comprend :

- un échangeur 110 présentant une entrée 112 et une sortie 113 ;

- une boite d'entrée 120 pour conduire l'air de suralimentation d'une entrée 101 du refroidisseur 100' vers l'échangeur 110 et en particulier vers l'entrée 112 de l'échangeur 110 ;
et

- une boite de sortie 130 pour conduire l'air de suralimentation de l'échangeur 110, et en particulier de la sortie 113 de l'échangeur 110, vers une sortie 102 du refroidisseur 100'.

L'entrée 101 du refroidisseur 100' est destinée à être reliée au premier élément amont 30 et la sortie 102 du refroidisseur 100 est destinée à être reliée au second élément aval 32 du circuit d'admission 14.

Plus précisément, l'échangeur 110 comprend ici un réseau de faisceaux 111, ces faisceaux 111 assurant la fonction de refroidissement de l'air de suralimentation qui traverse le refroidisseur 100'.

Par ailleurs, la boite d'entrée 120 permet quant à elle la distribution de l'air en provenance du compresseur 22 dans les différents faisceaux 111 et la boite de sortie 130 permet de collecter l'air, alors refroidi dans les faisceaux 111, à destination du moteur 12.

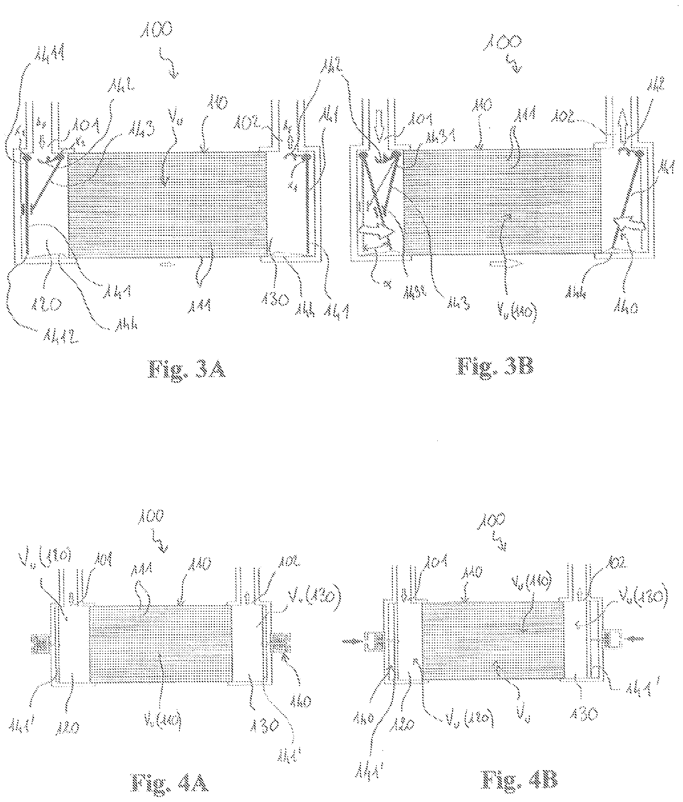

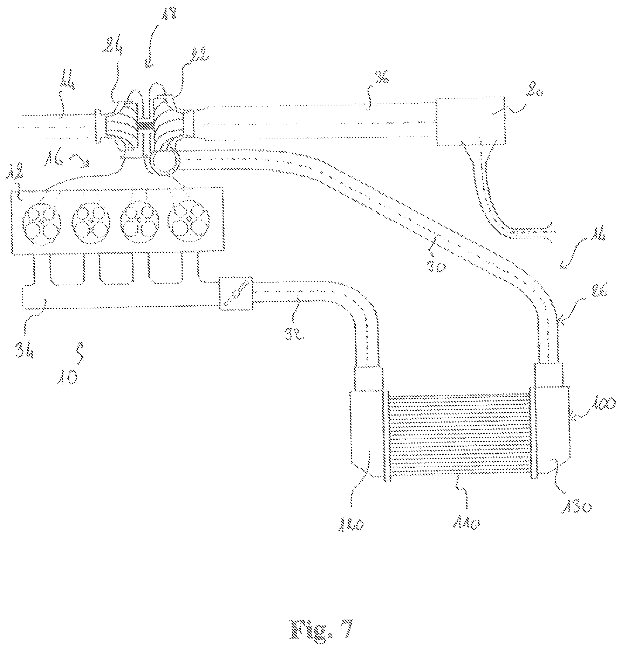

La présente invention propose un refroidisseur 100 amélioré, comme représenté selon différents modes de réalisation aux figures 3 à 6 et plus particulièrement dans l'application à un groupe motopropulseur représenté à la figure 7, qui permet, lors de son utilisation dans le cadre d'un circuit d'admission 14 d'air d'un moteur 12 suralimenté par un turbocompresseur 18, de favoriser le remplissage du moteur 12 en augmentant la pression dans le répartiteur d'air 34 d'une surpression acoustique lors de la fermeture des soupapes d'admission. Ceci permet l'augmentation du rendement volumique des chambres de combustion et la diminution du régime d'accrochage de façon que le turbocompresseur 18 puisse fonctionner dans une plage de régimes plus importante et pour augmenter le rendement du turbocompresseur 18.

L'augmentation du rendement du turbocompresseur 18 augmente le rendement volumique du moteur 12, et par conséquent le rendement du moteur 12 dans une large plage de fonctionnement du moteur.

En outre, l'invention proposée permet également de rehausser la dynamique de montée en charge du turbocompresseur sans influer sur les réglages moteurs, lesquels sont issus d'une optimisation du compromis consommation/performance et qui, par leur modification conduirait à une dérive des prestations moteur. En d'autres termes, le refroidisseur selon notre invention qui est utilisé dans un tel circuit d'admission permet l'amélioration de la dynamique moteur et donc du véhicule sans contrepartie sur la consommation.

Pour ce faire l'invention propose que un refroidisseur 100 comprenne des moyens de commande 140 agencés pour faire varier un volume utile $V_u$ (représenté dans les figures 3 à 6) dudit refroidisseur 100, étant entendu par « volume utile $V_u$ », un volume intérieur audit refroidisseur 100 délimité par la boite d'entrée 120, l'échangeur 110 et la boite de sortie 130 et agencé pour y recevoir l'air de suralimentation. Le volume utile $V_u$ du refroidisseur 100, est défini comme un volume intérieur délimité par la boite d'entrée 120, l'échangeur 110 et la boite de sortie 130 et agencé pour y recevoir l'air de suralimentation. En d'autres termes, le volume utile $V_u$ dudit refroidisseur 100 correspond sensiblement à la somme des volumes utiles $V_u(110)$, $V_u(120)$, $V_u(130)$ de ces éléments, i.e. respectivement de la boite d'entrée 120, de l'échangeur 110 et de la boite de sortie 130.

En effet, à chaque régime du moteur correspond une fréquence de vibration du circuit d'admission 14, comprenant un tel refroidisseur 100 d'air de suralimentation, qui favorise le remplissage naturel des chambres de combustion du moteur 12, optimisant le remplissage des chambres de combustion du moteur 12 de façon à diminuer le régime d'accrochage du turbocompresseur, tout en augmentant le rendement du turbocompresseur 18, et permettant par conséquent d'améliorer les performances du moteur 12 dans une plage élargie de régimes sans contrepartie sur la consommation du véhicule.

Quatre modes de réalisations sont illustrés dans les figures 3A, 3B, 4A, 4B, 5A, 5B, 6A et 6B.

Les figures 3A et 3B illustrent des vues en coupe d'un refroidisseur 100 selon un premier mode de réalisation de l'invention dans une position ouverte (figure 3A) et dans une position fermée (figure 3A).

Dans ce premier mode de réalisation, le refroidisseur 100 d'air de suralimentation présente deux moyens de commande 140, l'un étant logé dans la boite d'entrée 120, l'autre étant logé dans la boite de sortie 130.

Chacun des moyens de commande 140 comprend une palette mobile 141 en rotation par rapport au refroidisseur 100 et, est liée mécaniquement à au moins une cuillère 142.

Chacune des cuillères est placée en regard, soit de l'entrée 101 pour ce qui concerne le moyen de commande logé dans la boite d'entrée 120 du refroidisseur 100, soit de la sortie 102 pour ce qui concerne le moyen de commande logé dans la boite de sortie 130 du refroidisseur 100 de sorte qu'un angle $\alpha$ de rotation de la palette mobile 141 dépend de la pression exercée par l'air sur la cuillère 142 associée.

De cette manière, chaque palette mobile 141 est automatiquement mue sous l'effet des forces aérodynamiques du flux d'air incident sur la cuillère 142 associée, comme dans le cas d'un anémomètre, ladite cuillère 142 étant adaptée pour être disposée opportunément en travers du flux d'air du circuit d'admission 14 dans le but d'y recueillir le maximum d'effort susceptible d'exercer une force suffisante pour mouvoir en rotation la palette mobile 141 de laquelle la cuillère 142 est mécaniquement liée.

Dans les figures, le flux d'air est illustré par des flèches en traits fins.

Dans ce premier mode de réalisation, chaque palette mobile 141 est mobile en rotation entre :

- une position ouverte (illustrée figure 3A), correspondant à une position dans laquelle le volume utile $V_u(120)$, $V_u(130)$ de chacune des boites d'entrée 120 et de sortie 130 est maximum ; et

- une position fermée (illustrée figure 3B), correspondant à une position dans laquelle le volume utile $V_u(120)$, $V_u(130)$ de chacune des boites d'entrée 120 et de sortie 130 est minimum.

A des fins explicatives, est représenté sur la figure 3B les moyens de commande 140 dans leurs positions ouverte et fermée, le déplacement de ladite position ouverte à ladite position fermée étant illustré par des flèches.

Dans ce premier mode de réalisation, la variation du volume utile $V_u(120)$, $V_u(130)$ de chacune des boites d'entrée 120 et de sortie 130 entraine la variation du volume utile du refroidisseur 100 de façon à faire varier, lorsqu'un tel refroidisseur 100 est intégré dans un circuit d'admission 14, la fréquence de résonance dudit circuit d'admission 14 en fonction de la fréquence d'excitation du moteur 12 pour favoriser le remplissage naturel des chambres de combustion du moteur.

Chacune des palettes mobiles 141 peut être réalisée monobloc c'est-à-dire en une seule pièce, par exemple en un matériau moulé tel que du plastique ou du métal.

La palette mobile 141 présente de préférence un évidement tubulaire disposé à une première extrémité 1411 de manière a être traversé par un axe de rotation formant une première liaison pivot d'axe $X_1$ autour duquel la palette mobile 141 va pivoter selon le moment des forces exercé sur la cuillère 142 associée par rapport à cet axe de rotation.

Dans la position ouverte, illustrée figure 3A, chacune des palettes mobiles 141 est sensiblement accolée à une paroi intérieure de la boite d'entrée 120 ou respectivement de sortie 130 du refroidisseur 100, de préférence et comme c'est le cas ici, la paroi intérieure en regard avec l'entrée 112, ou respectivement la sortie 113, de l'échangeur 110.

De cette manière la palette mobile 141 forme une double paroi pour la boite d'entrée 120 ou de sortie 130 à l'intérieur de laquelle elle est logée.

Par ailleurs, chacune des boites d'entrée 120 ou de sortie 130 présente, au niveau d'une paroi intérieure située en regard avec une deuxième extrémité 1412 de la palette mobile 141, opposée à sa première extrémité 1411, une saillie d'étanchéité 144 dont la forme est adaptée pour suivre la trajectoire de cette deuxième extrémité 1412 de sorte à assurer une étanchéité durant le mouvement de rotation de la palette mobile 141 entre ladite deuxième extrémité 1412 et la paroi interne de la boite d'entrée 120 ou de sortie 130. Ici cette forme adaptée est sensiblement une portion de cercle sensiblement de centre $X_1$ et de rayon sensiblement égale à une longueur de la palette mobile 141 correspondant à la distance entre ses deux premier et deuxième extrémités 1411, 1412.

De cette manière, la deuxième extrémité 1412 de la palette mobile 141 parcours, entre la position ouverte et la position fermée, une trajectoire circulaire lors de la rotation de la palette mobile 141, au plus près de la saillie d'étanchéité 144 de forme géométrique sensiblement circulaire, de telle sorte que le long des arrêtes délimitant la deuxième extrémité 1412 de ladite palette mobile 141, le déplacement de celle-ci s'effectue avec le maximum d'étanchéité, tout en limitant les frottements, lesquels pourraient contraindre la rotation de ladite palette mobile 141.

Chacune des palettes mobiles 141 forme ainsi une paroi mobile d'une cavité, ou chambre, délimitée par la boite d'entrée 120 ou de sortie 130 et l'échangeur 110, et le volume utile $V_u$ traversé par l'air de suralimentation circulant dans le refroidisseur 100, varie de façon continue, permettant d'atteindre l'accord acoustique escompté.

Dans le cas où un tel dispositif est disposé en amont de l'échangeur 110, en particulier dans la boite d'entrée 120 du refroidisseur 100, la palette mobile 141 n'est pas solidaire de la cuillère 142, mais est mue par la décomposition de la force de réaction d'un bras 143 coulissant et liée mécaniquement à la cuillère 142.

Plus précisément, et en amont de l'échangeur 110, la palette mobile 141 est en rotation par rapport au refroidisseur au moyen de la première liaison pivot d'axe $X_1$ perpendiculaire à un axe $\Delta_F$ d'écoulement du flux d'air au niveau de l'entrée 101 du refroidisseur 100.

La cuillère 142 est quant à elle en rotation par rapport au refroidisseur 100 au moyen d'une deuxième liaison pivot d'axe $X_2$ parallèle à l'axe $X_1$ de rotation du premier pivot.

Le moyen de commande 140 comprend, comme représenté à la figure 3B, en outre et de manière non limitative, le bras 143 dont :

- une première 1431 extrémité est reliée mécaniquement à la cuillère 142 et en rotation par rapport à l'axe $X_2$ de la deuxième liaison pivot ; et

- une deuxième extrémité 1432 est reliée à la palette mobile 141 au moyen d'une liaison pivot glissant ou glissière.

Ainsi, la rotation de la cuillère 142 entraine la rotation du bras 143 et celle de la palette mobile 141.

De cette manière, à mesure que le flux d'air de suralimentation est important dans le refroidisseur 100, le volume se réduit automatiquement, réalisant implicitement l'accord acoustique recherché. L'optimisation de cet accord est obtenue en définissant le dimensionnement géométrique de la cuillère 142 et de la palette mobile 141.

En aval de l'échangeur 110, la palette mobile 141 est en rotation par rapport au refroidisseur au moyen de la première liaison pivot d'axe $X_1$ perpendiculaire à un axe $\Delta_F$ d'écoulement du flux d'air au niveau de la sortie 102 du refroidisseur 100.

La cuillère 142 est ici solidaire de cette palette mobile 141 au niveau de cette première liaison pivot. Ainsi, et de la même manière, à mesure que le flux d'air qui traverse le refroidisseur est important, l'effort exercé sur la cuillère 142 est important, et le volume utile $V_u$(130) de la boite de sortie 130, donc celui du refroidisseur 100 se réduit automatiquement.

Les moyens de commande 140 comprennent en outre un système de ressorts (non illustré) exerçant une contrainte élastique sur la palette mobile 141 de sorte que la position ouverte corresponde à une position stable. En d'autres termes, le système de ressorts est agencé pour exercer une force qui tend à s'opposer au déplacement de la cuillère 142 permettant ainsi le retour en position ouverte de la palette mobile 141 lorsque l'effort exercé par le flux d'air sur la cuillère 142 associée diminue suffisamment.

De cette manière, le tarage adéquat du système de ressorts permet une autorégulation du système prédéterminée. Un tel système, uniquement mécanique, présente comme premier avantage d'être fiable (pas de contrôle commande) et de ne pas consommer d'énergie électrique.

Dans un tel mode de réalisation, la pression nécessaire au déplacement des palettes mobiles 141 est de l'ordre de quelques millibars ce qui est donc viable dans le cadre d'un moteur 12 à combustion interne.

Les figures 4A et 4B illustrent des vues en coupe d'un refroidisseur selon un deuxième mode de réalisation de l'invention dans une position ouverte figure 4A et dans une position fermée figure 4B.

De la manière similaire au premier mode de réalisation, dans ce deuxième mode de réalisation les moyens de commande 140 permettent la variation du volume utile $V_u(120)$, $V_u(130)$ de chacune des boites d'entrée 120 et de sortie 130 entrainant la variation du volume utile du refroidisseur 100.

Plus précisément, les moyens de commande 140, ici au nombre de deux, comprennent chacun une paroi mobile 141' formant piston coulissant dans la boite d'entrée 120 et de sortie 130.

Dans ce mode de réalisation, les moyens de commande 141' ne sont pas autorégulés et comprennent en outre un dispositif électronique (non illustré) pour commander un vérin entrainant en translation la paroi mobile 141'. Des flèches en traits pleins illustrent sur la figure 4B le sens de déplacement des vérins pour entrainer les parois mobiles 141' formant piston de la position ouverte à la position fermée, c'est-à-dire d'une position dans laquelle le volume utile $V_u(120)$, $V_u(130)$ de chacune des boites d'entrée 120 et de sortie 130 est maximum à une position dans laquelle le volume utile $V_u(120)$, $V_u(130)$ de chacune des boites d'entrée 120 et de sortie 130 est minimum.

Cette paroi mobile 141' est dimensionnée de sorte que son pourtour corresponde, au moins localement aux dimensions des parois intérieures de la boite d'entrée 120 ou de sortie 130 de de la cavité, ou chambre, délimitée par la boite d'entrée 120 ou de sortie 130 et l'échangeur 110. De cette manière la paroi mobile 141' est adaptée à translater par rapport à la boite d'entrée 120 ou de sortie 130 tel un piston faisant varier le volume utile $V_u(120)$, $V_u(130)$ de ladite boite d'entrée 120 ou de sortie 130 correspondante.

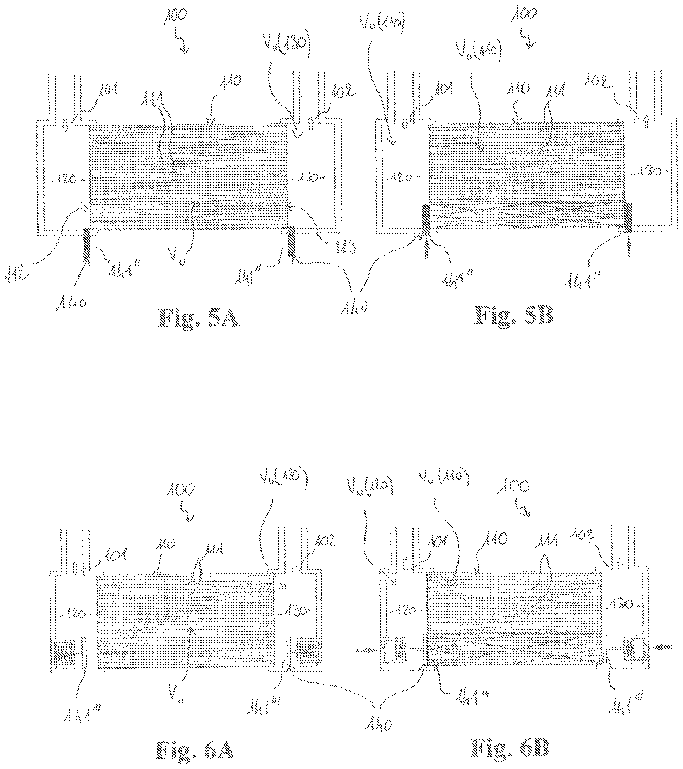

Les figures 5A et 5B illustrent des vues en coupe d'un refroidisseur 100 selon un troisième mode de réalisation de l'invention dans une position ouverte figure 5A et dans une position fermée figure 5B.

Dans ce troisième mode de réalisation, les moyens de commande 140 comprennent deux parois de fermeture 141", disposées de part et d'autre de faisceaux 111 du réseau de faisceaux 111 de l'échangeur 110, au niveau de l'entrée 112 et de la sortie 113 dudit échangeur 110.

Plus précisément, ces parois de fermeture 141" sont mobiles entre :

- une position ouverte (voir figure 5A), dans laquelle l'ensemble des faisceaux 111 du réseau de faisceaux 111 sont ouverts à l'entrée 112 et à la sortie 113 dudit réseau de faisceaux 111, cette position correspondant à une position dans laquelle le volume utile $V_u(110)$ de l'échangeur 110 est maximum ; et

- une position fermée (voir figure 5B), dans laquelle un nombre maximum N prédéterminé de faisceaux 111 du réseau de faisceaux 111 sont fermés à l'entrée 112 et à la sortie 113 dudit réseau de faisceaux 111, cette position correspondant à une position dans laquelle le volume utile $V_u(110)$ de l'échangeur 110 est minimum.

Par ailleurs, dans ce troisième mode de réalisation, ces parois de fermeture 141" sont mobiles, par exemple en translation comme c'est le cas ici, dans un plan orthogonal à l'orientation des faisceaux 111 du réseau de faisceaux 111.

Une telle caractéristique permet notamment de pouvoir fermer progressivement les faisceaux 111 au fur et à mesure que les parois fermeture 141" mobiles se déplacent de la position ouverte à la position fermée. En d'autre terme, les parois de fermeture 141" mobiles présentent alors des positions intermédiaires dans lesquelles un nombre n inférieur au nombre maximum N prédéterminé de faisceaux 111 du réseau de faisceaux 111 sont fermés à l'entrée 112 et à la sortie 113 dudit réseau de faisceaux 111.

Les figures 6A et 6B illustrent des vues en coupe éclatées d'un refroidisseur 100 selon un quatrième mode de réalisation de l'invention dans une position ouverte figure 6A et dans une position fermée figure 6B.

Ce quatrième mode de réalisation diffère principalement du troisième mode de réalisation en ce que les parois de fermetures 141''' sont mobiles en translation suivant un axe parallèle à un axe des faisceaux du réseau de faisceaux 111.

De même que le deuxième mode de réalisation, les troisième et quatrième modes de réalisation comprennent des moyens de commande 140 qui ne sont pas autorégulés et les parois de fermeture 141", 141''' sont associées chacune à au moins un dispositif électronique (non illustré) pour commander un vérin entrainant selon le mouvement désiré, par exemple en translation, ladite paroi de fermeture 141" mobile.

Par ailleurs, dans ces troisième et quatrième modes de réalisation, et contrairement aux premier et deuxième modes de réalisation, les moyens de commande 140, par l'intermédiaire des parois de fermeture 141", 141''' mobiles permettent de faire varier le volume utile $V_u(110)$ de l'échangeur 110, à savoir du réseau de faisceaux 111 donc de faire varier le volume utile du refroidisseur 100.

Dans ce cas il est avantageux pour des raisons vibratoires, que les faisceaux du réseau de faisceaux 111 soient, en position fermée, fermés à leur entrée 112 et à leur sortie 113, c'est-à-dire que les moyens de commande 140 sont au nombre de deux et placés symétriquement par rapport à l'échangeur 110.

La modification du volume utile de l'échangeur, et donc de la partie présentant une fonction de refroidissement, est effectué en bouchant plus ou moins de faisceaux 111 à l'aide parois de fermeture 141 " mobiles.

Les faisceaux 111 isolés de l'ensemble vibratoire par leur fermeture au moyen des parois de fermeture 141", 141''' mobiles permettent dans la position fermée de diminuer le volume utile $V_u(110)$ de l'échangeur. Le volume ainsi isolé est représenté sur les figures 5B et 6B par des hachures.

De façon surprenante, le fait de masquer une partie des faisceaux 111, c'est-à-dire de les isoler de l'ensemble vibratoire, n'a que très peu d'impact sur les prestations thermiques du refroidisseur 100 d'air suralimenté dans la mesure où un tel refroidisseur 100 est activé à bas régime, alors que ledit refroidisseur 100 d'air suralimenté est sur-capacitaire.

Toutes les solutions proposées présentent l'avantage de présenter une position de repos, c'est-à-dire la position ouverte, correspondant au volume maximal et donc le plus favorable pour les bas régimes.

Des études numériques ont été réalisées pour quantifier les variations de volume utile nécessaires à l'obtention d'un système apportant des gains suffisamment significatifs. Concernant les dispositifs de commande entrainant la variation des volumes de boîte d'entrée 120 et/ou sortie 130 du refroidisseur 130, la plage de variation est de préférence d'au moins deux litres pour chaque boîte d'entrée ou de sortie, ce qui est compatible avec de l'ordre de grandeur des boîtes d'entrée 120 et de sortie 130 « standard ».

Avec une variation de deux litres, la valorisation en fonctionnement transitoire témoigne d'une dynamique de montée en charge améliorée d'au moins 5 à 10%.

L'invention est décrite dans ce qui précède à titre d'exemple. Il est entendu que l'homme du métier est à même de réaliser différentes variantes de réalisation de l'invention sans pour autant sortir du cadre de l'invention.

Par exemple, il est clair que l'homme du métier peut combiner entre elles les solutions décrites dans les modes de réalisations illustrés.

Par exemple, sont illustrés dans les figures 3-6 des refroidisseurs 100 d'air suralimenté présentant des moyens de commande 140 modulant à la fois le volume utile $V_u(120)$, $V_u(130)$ des boîtes d'entrée 120 et de sortie 130 du refroidisseur 100 d'air suralimenté ou le volume utile $V_u(110)$ de l'échangeur 110 par l"isolation partielle des faisceaux 111. Toutes les combinatoires de ces différents moyens de commande 140 sont bien évidemment possibles, la combinaison d'une réduction du volume utile $V_u(120)$, $V_u(130)$ des boîtes d'entrée 120 et de sortie 130 associée à un masquage des faisceaux 111 ayant un effet double.

En outre, dans le cas où les moyens de commande permettent de moduler le volume utile $V_u(120)$, $V_u(130)$ des boîtes d'entrée 120 et de sortie 130 du refroidisseur 100, le refroidisseur 100 peut comporter seulement un moyen de commande, faisant varier dans ce cas au choix, soit le volume utile $V_u(120)$ de la boîte d'entrée 120, soit volume utile $V_u(130)$ de la boîte de sortie 130. Par ailleurs, il est possible de combiner dans un même refroidisseur des moyens de commande 140 comprenant à la fois une palette mobile 141 et une paroi mobile 141' formant piston.

Dans le cas où les moyens de commande 140 sont agencés pour moduler le volume utile $V_u(110)$ de l'échangeur 110 par l"isolation partielle des faisceaux 111, il est possible de combiner dans un même refroidisseur des moyens de commande comprenant à la fois, d'un côté des faisceaux 111, une ou plusieurs paroi(s) de fermeture 141" mobile(s) en translation selon l'axe des dits faisceaux 111, et de l'autre côtés des faisceaux 111, une ou plusieurs paroi(s) de fermeture 141''' mobile(s) en translation dans un plan perpendiculaire à l'axe des dits faisceaux 111.

## Revendications

1.  Refroidisseur (100) d'air de suralimentation pour un circuit d'admission (14) d'air d'un moteur (12) suralimenté par un turbocompresseur (18), le refroidisseur (100) comprenant :

    - un échangeur (110) ;
    - une boite d'entrée (120) pour conduire l'air de suralimentation d'une entrée (101) du refroidisseur (100) vers l'échangeur (110) ; et
    - une boite de sortie (130) pour conduire l'air de suralimentation de l'échangeur (110) vers une sortie (102) du refroidisseur (100) ;

    la boite d'entrée (120), l'échangeur (110) et la boite de sortie (130) délimitant un volume utile ($V_u$) agencé pour y recevoir l'air de suralimentation, le refroidisseur (100) étant **caractérisé en ce qu'**il comprend des moyens de commande (140) agencés pour faire varier le volume utile ($V_u$) en fonction de la fréquence d'excitation du moteur pour favoriser le remplissage naturel des chambres de combustion du moteur.

2.  Refroidisseur (100) d'air de suralimentation selon la revendication 1, **caractérisé en ce que** les moyens de commande (140) sont logés au moins en partie dans la boite d'entrée (120) et/ou dans la boite de sortie (130).

3.  Refroidisseur (100) d'air de suralimentation selon l'une quelconque des revendications 1 ou 2, **carac-**

**térisé en ce que** les moyens de commande (140) sont autorégulés.

4. Refroidisseur (100) d'air de suralimentation selon la revendication 3, **caractérisé en ce que** les moyens de commande (140) comprennent au moins une palette mobile (141) en rotation par rapport au refroidisseur (100) et liée mécaniquement à au moins une cuillère (142) placée en regard de l'entrée (101) ou de la sortie (102) du refroidisseur (100), de sorte qu'un angle ($\alpha$) de rotation de la palette mobile (141) dépend de la pression exercée par l'air sur la cuillère (142) associée.

5. Refroidisseur (100) d'air de suralimentation selon l'une quelconque des revendications 1 à 4, **caractérisé en ce que** les moyens de commande (140) comprennent au moins une paroi mobile (141') formant piston coulissant dans la boite d'entrée (120) et/ou de sortie (130).

6. Refroidisseur (100) d'air de suralimentation selon l'une quelconque des revendications 1 à 3, caractérisé en ce les moyens de commande (140) comprennent au moins deux parois de fermeture (141", 141") mobiles entre :

   - une position ouverte, dans laquelle l'ensemble des faisceaux (111) du réseau de faisceaux (111) sont ouverts à l'entrée (112) et à la sortie (113) dudit réseau de faisceaux (111) ; et
   - une position fermée dans laquelle un nombre maximum (N) prédéterminé de faisceaux (111) du réseau de faisceaux (111) sont fermés à l'entrée (112) et à la sortie (113) dudit réseau de faisceaux (111).

7. Refroidisseur (100) d'air de suralimentation selon la revendication 6, **caractérisé en ce que** la paroi de fermeture (141") mobile présente une position intermédiaire dans laquelle un nombre (n) inférieur au nombre maximum (N) prédéterminé de faisceaux (111) du réseau de faisceaux (111) sont fermés à l'entrée (112) et/ou à la sortie (113) dudit réseau de faisceaux (111).

8. Circuit d'admission (14) d'air d'un moteur (12) suralimenté par un turbocompresseur (18), reliant un compresseur (22) du turbocompresseur (18) et un répartiteur d'air (34) qui permet de répartir l'air de suralimentation entre des orifices d'admission des chambres de combustion du moteur (12), le circuit d'admission étant **caractérisé en ce qu'**il comporte un refroidisseur (100) d'air de suralimentation selon l'une quelconque des revendications 1 à 7.

9. Moteur (12) suralimenté par un turbocompresseur (18) comprenant un circuit d'admission (14), le moteur (12) étant **caractérisé en ce que** le circuit d'admission (14) d'air comprend un refroidisseur (100) d'air de suralimentation selon l'une quelconque des revendications 1 à 7.

**Patentansprüche**

1. Ladeluftkühler (100) für ein Luftansaugsystem (14) eines von einem Turbolader (18) aufgeladenen Motors (12), wobei der Kühler (100) umfasst:

   - einen Wärmetauscher (110);
   - einen Eintrittskasten (120) zum Leiten der Ladeluft von einem Einlass (101) des Kühlers (100) zu dem Wärmetauscher (110); und
   - einen Austrittskasten (130) zum Leiten der Ladeluft von dem Wärmetauscher (110) zu einem Auslass (102) des Kühlers (100);

   wobei der Eintrittskasten (120), der Wärmetauscher (110) und der Austrittskasten (130) ein Nutzvolumen ($V_u$) begrenzen, das dafür ausgelegt ist, die Ladeluft darin aufzunehmen,
   wobei der Kühler (100) **dadurch gekennzeichnet ist, dass** er Steuerungsmittel (140) umfasst, die dafür ausgelegt sind, ein Variieren des Nutzvolumens ($V_u$) in Abhängigkeit von der Anregungsfrequenz des Motors zu bewirken, um die natürliche Füllung der Verbrennungsräume des Motors zu fördern.

2. Ladeluftkühler (100) nach Anspruch 1, **dadurch gekennzeichnet, dass** die Steuerungsmittel (140) wenigstens teilweise im Eintrittskasten (120) und/oder im Austrittskasten (130) aufgenommen sind.

3. Ladeluftkühler (100) nach einem der Ansprüche 1 oder 2, **dadurch gekennzeichnet, dass** die Steuerungsmittel (140) selbstregulierend sind.

4. Ladeluftkühler (100) nach Anspruch 3, **dadurch gekennzeichnet, dass** die Steuerungsmittel (140) wenigstens eine bewegliche Platte (141) umfassen, die bezüglich des Kühlers (100) rotiert und mechanisch mit wenigstens einem Löffel (142) verbunden ist, der gegenüber dem Einlass (101) oder dem Auslass (102) des Kühlers (100) angeordnet ist, derart, dass ein Drehwinkel ($\alpha$) der beweglichen Platte (141) von dem Druck abhängt, der von der Luft auf den zugehörigen Löffel (142) ausgeübt wird.

5. Ladeluftkühler (100) nach einem der Ansprüche 1 bis 4, **dadurch gekennzeichnet, dass** die Steuerungsmittel (140) wenigstens eine bewegliche Wand (141') umfassen, die einen in dem Eintrittskasten (120) und/oder Austrittskasten (130) gleitenden Kolben bildet.

**6.** Ladeluftkühler (100) nach einem der Ansprüche 1 bis 3, **dadurch gekennzeichnet, dass** die Steuerungsmittel (140) wenigstens zwei Verschlusswände (141", 141") umfassen, die beweglich sind zwischen:

- einer offenen Position, in welcher sämtliche Bündel (111) des Netzes von Bündeln (111) am Einlass (112) und am Auslass (113) des Netzes von Bündeln (111) offen sind; und
- einer geschlossenen Position, in welcher eine vorbestimmte maximale Anzahl (N) von Bündeln (111) des Netzes von Bündeln (111) am Einlass (112) und am Auslass (113) des Netzes von Bündeln (111) geschlossen ist.

**7.** Ladeluftkühler (100) nach Anspruch 6, **dadurch gekennzeichnet, dass** die bewegliche Verschlusswand (141") eine Zwischenposition aufweist, in welcher eine Anzahl (n) von Bündeln (111) des Netzes von Bündeln (111), die kleiner als die vorbestimmte maximale Anzahl (N) ist, am Einlass (112) und/oder am Auslass (113) des Netzes von Bündeln (111) geschlossen ist.

**8.** Luftansaugsystem (14) eines von einem Turbolader (18) aufgeladenen Motors (12), welches einen Verdichter (22) des Turboladers (18) und einen Luftverteiler (34), der es ermöglicht, die Ladeluft auf die Einlassöffnungen der Verbrennungsräume des Motors (12) zu verteilen, verbindet, wobei das Ansaugsystem **dadurch gekennzeichnet ist, dass** es einen Ladeluftkühler (100) nach einem der Ansprüche 1 bis 7 aufweist.

**9.** Von einem Turbolader (18) aufgeladener Motor (12), welcher ein Ansaugsystem (14) umfasst, wobei der Motor (12) **dadurch gekennzeichnet ist, dass** das Luftansaugsystem (14) einen Ladeluftkühler (100) nach einem der Ansprüche 1 bis 7 umfasst.

**Claims**

**1.** Charge-air cooler (100) for an air-intake circuit (14) of an engine (12) supercharged by a turbocharger (18), the cooler (100) comprising:

- an exchanger (110);
- an inlet box (120) for conducting the charge air from an inlet (101) of the cooler (100) to the exchanger (110); and
- an outlet box (130) for conducting the charge air from the exchanger (110) to an outlet (102) of the cooler (100);

the inlet box (120), the exchanger (110) and the outlet box (130) delimiting a useful volume ($V_u$) designed to receive the charge air therein, the cooler (100) being **characterized in that** it comprises control means (140) designed to vary the useful volume ($V_u$) as a function of the excitation frequency of the engine in order to promote the natural filling of the combustion chambers of the engine.

**2.** Charge-air cooler (100) according to Claim 1, **characterized in that** the control means (140) are housed at least in part in the inlet box (120) and/or in the outlet box (130).

**3.** Charge-air cooler (100) according to either one of Claims 1 and 2, **characterized in that** the control means (140) are self-regulated.

**4.** Charge-air cooler (100) according to Claim 3, **characterized in that** the control means (140) comprise at least one movable blade (141) which is rotatable with respect to the cooler (100) and mechanically connected to at least one scoop (142) placed opposite the inlet (101) or the outlet (102) of the cooler (100), with the result that an angle ($\alpha$) of rotation of the movable blade (141) depends on the pressure exerted by the air on the associated scoop (142).

**5.** Charge-air cooler (100) according to any one of Claims 1 to 4, **characterized in that** the control means (140) comprise at least one movable wall (141') forming a piston which slides in the inlet box (120) and/or outlet box (130).

**6.** Charge-air cooler (100) according to any one of Claims 1 to 3, **characterized in that** the control means (140) comprise at least two closure walls (141", 141") which are movable between:

- an open position, in which all the bundles (111) of the array of bundles (111) are open at the inlet (112) and at the outlet (113) of the said array of bundles (111); and
- a closed position in which a predetermined maximum number (N) of bundles (111) of the array of bundles (111) are closed at the inlet (112) and at the outlet (113) of the said array of bundles (111).

**7.** Charge-air cooler (100) according to Claim 6, **characterized in that** the movable closure wall (141") has an intermediate position in which a number (n) below the predetermined maximum number (N) of bundles (111) of the array of bundles (111) are closed at the inlet (112) and/or at the outlet (113) of the said array of bundles (111).

**8.** Air-intake circuit (14) of an engine (12) supercharged by a turbocharger (18), connecting a compressor (22) of the turbocharger (18) and an air distributor (34) which makes it possible to distribute the charge air between intake orifices of the combustion chambers of the engine (12), the intake circuit being **characterized in that** it comprises a charge-air cooler (100) according to any one of Claims 1 to 7.

9. Engine (12) supercharged by a turbocharger (18) and comprising an intake circuit (14), the engine (12) being **characterized in that** the air-intake circuit (14) comprises a charge-air cooler (100) according to any one of Claims 1 to 7.

**Fig. 1**

**Fig. 2**

Fig. 3A

Fig. 3B

Fig. 4A

Fig. 4B

Fig. 5A

Fig. 5B

Fig. 6A

Fig. 6B

Fig. 7

**RÉFÉRENCES CITÉES DANS LA DESCRIPTION**

**Documents brevets cités dans la description**

- WO 2011102784 A

- FR 2818319